# EUROPEAN PATENT APPLICATION

(11) **EP 4 811 105 A1**
(43) Date of publication of application: **23.09.2026**
(21) Application number: 25199796.1
(22) Date of filing: 03.09.2025
(51) Int. Cl.: G06F 3/12

(54) **INFORMATION PROCESSING SYSTEM, INFORMATION PROCESSING PROGRAM, AND INFORMATION PROCESSING METHOD**

(30) Priority: 19.03.2025 JP 2025046011
(71) Applicant: Fujifilm Business Innovation Corp., Tokyo 107-0052 (JP)
(72) Inventor: LIU, Bo, Yokohama (JP)
(74) Representative: Meissner Bolte Partnerschaft mbB

(57) **Abstract**

An information processing system includes a processor configured to arrange and display jobs scheduled to be processed by multiple machines along a time axis for each of the machines; upon receiving a new job to be newly arranged, acquire process attribute information related to a process executed by the new job; acquire, from the multiple machines, attribute information related to processing capacity of each of the machines; and display candidate machines for executing the process and other machines in different manners using the process attribute information and the attribute information of each of the machines.

## Description

### Background

### (i) Technical Field

The present disclosure relates to an information processing system, an information processing program, and an information processing method.

### (ii) Related Art

Japanese Unexamined Patent Application Publication No. 2017-79336 discloses a technique for displaying schedule views sequentially arranged for assigned printers, the schedule views each represented by a rectangle having a length according to the printing time of an individual print job and the color or pattern according to the state of the print job.

### Summary

With the technique of Japanese Unexamined Patent Application Publication No. 2017-79336, the schedule of a plurality of machines is represented and displayed by a rectangle according the turnaround time of each job, thus can be checked; however, it has been difficult for a user to recognize the machines suitable for the job to be executed.

Accordingly, it is an object of the present disclosure to provide an information processing system, an information processing program, and an information processing method that enable recognition of the machines suitable for the job to be executed among a plurality of machines.

An information processing system according to a first aspect includes a processor configured to arrange and display jobs scheduled to be processed by a plurality of machines along a time axis for each of the machines; upon receiving a new job to be newly arranged, acquire process attribute information related to a process executed by the new job; acquire, from the plurality of machines, attribute information related to processing capacity of each of the machines; and display candidate machines for executing the process and other machines in different manners using the process attribute information and the attribute information of each of the machines.

An information processing system according to a second aspect is the information processing system according to the first aspect in which the processor is configured to calculate a degree of suitability of each of the machines using the process attribute information and the attribute information of each of the machines, and derive, as the candidate machines, machines with the calculated degree of suitability higher than degrees of suitability of other machines.

An information processing system according to a third aspect is the information processing system according to the first aspect in which the processor is configured to calculate a degree of suitability of each of the machines using the process attribute information and the attribute information of each of the machines, and derive, as the candidate machines, machines with the calculated degree of suitability higher than or equal to a predetermined threshold value.

An information processing system according to a fourth aspect is the information processing system according to any one of the first to third aspects in which the processor is configured to calculate a turnaround time required for the job using the process attribute information at a timing of receiving the job, and derive candidate machines using the turnaround time and the attribute information of each of the machines at a timing of selection of the job.

An information processing system according to a fifth aspect is the information processing system according to any one of the first to third aspects in which the processor is configured to calculate a turnaround time required for the job using the process attribute information at a timing of selection of the job after the job is received, and derive the candidate machines using the calculated turnaround time and the attribute information of each of the machines.

An information processing system according to a sixth aspect is the information processing system according to any one of the first to fifth aspects in which the processor is configured to display the candidate machines and the other machines in different modes.

The information processing system according to a seventh aspect is the information processing system according to the sixth aspect in which the processor is configured to display a best candidate among the candidate machines in an identifiable mode.

An information processing system according to an eighth aspect is the information processing system according to any one of the first to seventh aspects in which the processor is configured to display a predetermined number of machines achieving early execution of the job as the candidate machines, and the other machines in different manners.

An information processing system according to a ninth aspect is the information processing system according to the eighth aspect in which the processor is configured to display, as the candidate machines, a machine achieving earliest completion of the job in an identifiable mode.

An information processing system according to a tenth aspect is the information processing system according to any one of the first to ninth aspects in which the processor is configured to derive the candidate machines using a learning model learned in advance.

An information processing system according to an eleventh aspect is the information processing system according to the tenth aspect in which the learning model is a learning model learned using a past print history.

An information processing system according to a twelfth aspect is the information processing system according to any one of the first to eleventh aspects in which the processor is configured to derive the candidate machines capable of performing the process without replenishing consumables.

An information processing system according to a thirteenth aspect is the information processing system according to any one of the first to eleventh aspects in which the processor is configured to acquire the process attribute information including worker in charge information, and derive the candidate machines further using the worker in charge information.

An information processing program according to a fourteenth aspect causing a computer to execute a process including: arranging and displaying jobs scheduled to be processed by a plurality of machines along a time axis for each of the machines; upon receiving a new job to be newly arranged, acquiring process attribute information related to a process executed by the new job; acquiring, from the plurality of machines, attribute information related to processing capacity of each of the machines; and displaying candidate machines for executing the process and other machines in different manners using the process attribute information and the attribute information of each of the machines.

An information processing method according to a fifteenth aspect includes: arranging and displaying jobs scheduled to be processed by a plurality of machines along a time axis for each of the machines; upon receiving a new job to be newly arranged, acquiring process attribute information related to a process executed by the new job; acquiring, from the plurality of machines, attribute information related to processing capacity of each of the machines; and displaying candidate machines for executing the process and other machines in different manners using the process attribute information and the attribute information of each of the machines.

According to the first aspect, it is possible to provide an information processing system that enables recognition of the machines suitable for the job to be executed among a plurality of machines.

According to the second aspect, it is possible to recognize machines with a degree of suitability for a job higher than that of other machines.

According to the third aspect, it is possible to recognize machines with a degree of suitability higher than or equal to a predetermined threshold value.

According to the fourth aspect, the processing time for displaying the candidate machines can be reduced, as compared to when the turnaround time of each candidate machine is calculated at the time of display of the candidate machine.

According to the fifth aspect, the processing load for receiving a job can be reduced, as compared to when the turnaround time is calculated at the timing of receiving the job.

According to the sixth aspect, the candidate machines and the other machines can be easily distinguished, as compared to when the candidate machines and the other machines are not displayed in different modes.

According to the seventh aspect, the best machine among the candidate machines can be recognized.

According to the eighth aspect, it is possible to recognize machines that achieve early completion of the job among the plurality of machines.

According to the ninth aspect, it is possible to recognize the machine that achieves the earliest completion of the job among the plurality of machines.

According to the tenth aspect, the candidate machines that execute the process can be derived.

According to the eleventh aspect, candidates according to a past print history can be derived.

According to the twelfth aspect, candidate machines can be derived in consideration of absence of a worker in the middle of night.

According to the thirteenth aspect, candidate machines can be derived in consideration of possibility of a difficult personalized work.

According to the fourteenth aspect, it is possible to provide an information processing program that enables recognition of machines suitable for the job to be executed among a plurality of machines.

According to the fifteenth aspect, it is possible to provide an information processing program that enables recognition of machines suitable for the job to be executed among a plurality of machines.

### Brief Description of the Drawings

Exemplary embodiments of the present disclosure will be described in detail based on the following figures, wherein:
Fig. 1 is a view illustrating a schematic configuration of a print processing system according to an exemplary embodiment;
Fig. 2 is a block diagram illustrating a schematic configuration of a print management device and a digital front end device in the print processing system according to the exemplary embodiment;
Fig. 3 is a functional block diagram illustrating an example of a functional configuration of the print management device according to the first exemplary embodiment;
Fig. 4 is a screen illustrating a display example of candidate printers;
Fig. 5 is a flowchart illustrating an example of a flow of a process performed when a job is registered in an unassigned job process in the print management device according to the first exemplary embodiment;
Fig. 6 is a flowchart illustrating an example of a flow of a process performed when an unassigned job is selected and candidates for executing the job are displayed in the print management device according to the first exemplary embodiment;
Fig. 7 is a functional block diagram illustrating an example of a functional configuration of a print management device according to a second exemplary embodiment;
Fig. 8 is a flowchart illustrating an example of a flow of a process performed when a job is registered in an unassigned job process in the print management device according to a second exemplary embodiment;
Fig. 9 is a flowchart illustrating an example of a flow of a process performed when an unassigned job is selected and candidates for executing the job are displayed in the print management device according to the second exemplary embodiment;
Fig. 10 is a functional block diagram illustrating an example of a functional configuration of a print management device according to a third exemplary embodiment; and
Fig. 11 is a diagram illustrating an example of input and output to and from a machine learning model.

### Detailed Description

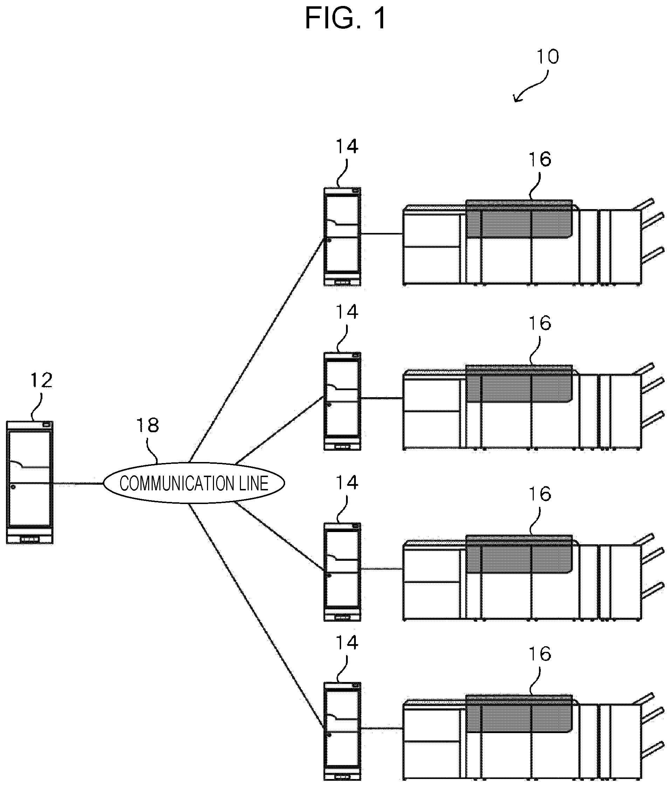

Hereinafter, an example of an exemplary embodiment of the present disclosure will be described in detail with reference to the drawings. In the exemplary embodiment, a print processing system will be described as an example. Fig. 1 is a view illustrating the schematic configuration of the print processing system according to the exemplary embodiment.

A print processing system 10 according to the exemplary embodiment includes: a print management device 12 as an example of an information processing system; a plurality of digital front end processor (DFE) devices 14; and a plurality of printers 16.

The print management device 12 and each of the plurality of DFE devices 14 are connected through a communication line 18 such as a local area network (LAN), a wide area network (WAN), the Internet, or the Intranet. The print management device 12 and each of the plurality of DFE devices 14 can transmit and receive various types of data to and from each other through the communication line 18.

Each DFE device 14 is connected to a printer 16. Each DFE device 14 controls the printer 16 based on a job received from the print management device 12 to perform printing. For example, the DFE device 14 sequentially receives a job including print data described in a page description language (PDL) from the print management device 12, converts (raster image processor processing: RIP processing) the print data to raster images, further sends the RIP processed image data and print attribute information such as the number of prints and the paper size to the printer 16, and controls the print engine and paper transport system of the printer 16 to cause the printer 16 to execute a print process. In other words, the printing operation of the printer 16 is controlled by a printer controller of the DFE device 14. The print data for four colors (YMCK) i.e., three colors, yellow (Y), cyan (C), magenta (M) as the primary colors for color printing in addition to black (K) is sent to the printer 16. Note that the job in the exemplary embodiment refers to a process or a set of processes to be executed by the printer 16 to perform printing; however, the job in the present disclosure is not limited to a process or a set of processes related to printing.

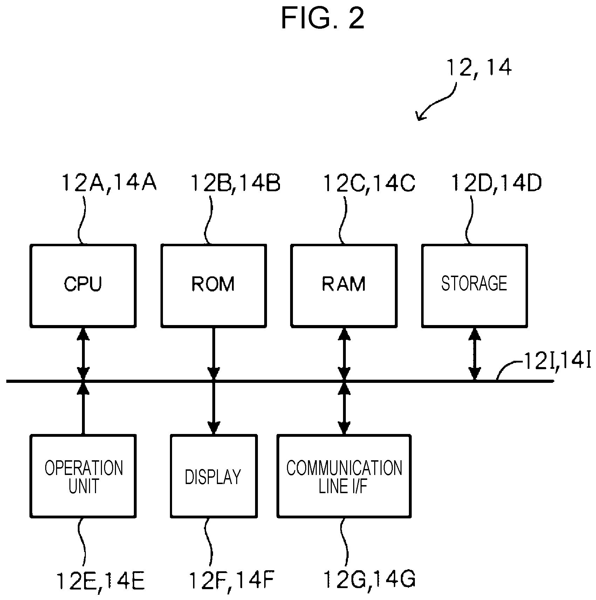

Next, the configuration of the print management device 12 and the DFE device 14 will be described. Fig. 2 is a block diagram illustrating the schematic configuration of the print management device 12 and the DFE device 14 in the print processing system 10 according to the exemplary embodiment. Note that since the print management device 12 and the DFE device 14 have a general computer configuration, the print management device 12 will be described representatively. For the DFE device 14, only the symbols corresponding to the components of the print management device 12 are illustrated in Fig. 2.

As illustrated in Fig. 2, the print management device 12 according to the exemplary embodiment includes a CPU 12A as an example of a processor, a ROM 12B, a RAM 12C, a storage 12D, an operating unit 12E, a display 12F, and a communication line I/F (interface) 12G. The CPU 12A manages the overall operation of the print management device 12. The ROM 12B pre-stores various control programs, various parameters and the like. The RAM 12C is used as a work area or the like when various programs are executed by the CPU 12A. The storage 12D stores various types of data, application programs and the like. The operation unit 12E is used to input various information. The display 12F is used to display various information. The communication line I/F 12G is connected to the communication line 18 for transmitting and receiving various types of data to and from other devices connected to the communication line 18. The communication line I/F 12G may be configured to directly communicate with the devices using known various wireless communications. The components of the print management device 12 above are electrically connected to each other by a system bus 12I. Note that in the print management device 12 according to the exemplary embodiment, the storage 12D is used as a storage unit, and a non-volatile storage unit such as a hard disk drive (HDD) or a flash memory is used as an example of the storage.

With the above-described configuration, the print management device 12 according to the exemplary embodiment accesses the ROM 12B, the RAM 12C, and the storage 12D by the CPU 12A, obtains various types of data through the operation unit 12E, and displays various information on the display 12F. In addition, the print management device 12 controls the transmission and reception of communication data through the communication line I/F 12G by the CPU 12A.

### (First Exemplary Embodiment)

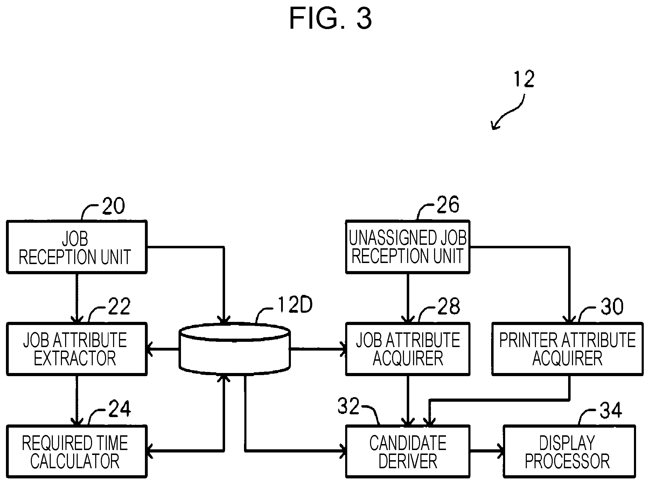

Next, the functional configuration of the print management device 12 according to the first exemplary embodiment will be described. The functional configuration is implemented by the CPU 12A of the print management device 12 loading a program stored in the ROM 12B or the storage 12D into the RAM12C and executing the program. Fig. 3 is a functional block diagram illustrating an example of the functional configuration of the print management device 12 according to the first exemplary embodiment.

The print management device 12 has functions of a job reception unit 20, a job attribute extractor 22, a turnaround time calculator 24, an unassigned job reception unit 26, a job attribute acquirer 28, a printer attribute acquirer 30, a candidate deriver 32, and a display processor 34. With these functions, the print management device 12 according to the present exemplary embodiment arranges and displays jobs scheduled to be processed by a plurality of printers 16 along the time axis for each of the printers 16. When a new job to be newly arranged is received, job attribute information related to the process executed in the new job is acquired, and attribute information related to the processing capacity of each of printer 16 is acquired from the plurality of printers 16. Using the job attribute information and the attribute information of each printer 16, a process of displaying candidate machines for executing the job process and other machines in different manners is performed.

The job reception unit 20 receives a job including a print file requested from a client and job attribute information related to printing, and stores the job in the storage 12D. When storing the job in the storage 12D, the job reception unit 20 registers the received job as an unassigned job process. Note that the job attribute information corresponds to processing attribute information related to the process to be executed in the new job.

When the job is registered in the unassigned job process, the job attribute extractor 22 analyzes the job, and extracts all pieces of job attribute information that affects on the printing speed, such as the number of pages, color mode, and imposition method of the job.

The turnaround time calculator 24 calculates the turnaround time required for printing an unassigned job based on the job attribute information extracted by the job attribute extractor 22 and the past job history. The turnaround time calculator 24 calculates the turnaround time from the past job history using the average value or the like of histories corresponding to the job attribute information. The calculated turnaround time is added to the job attribute information, which is stored in the storage 12D. Note that it is assumed that the storage 12D stores the past print history necessary for calculation of the turnaround time for printing.

The unassigned job reception unit 26 receives selection of a job to be executed from the jobs registered in the unassigned job process.

The job attribute acquirer 28 acquires, from the storage 12D, job attribute information corresponding to the selected job, the job attribute information with the turnaround time added.

The printer attribute acquirer 30 acquires the printer attribute information of each printer 16 from all DFE devices 14. The printer attribute information includes the function, performance and schedule of each printer, and corresponds to the attribute information related to the processing capacity of each printer 16.

The candidate deriver 32 derives candidate printers 16 for executing the unassigned job registered in the unassigned job process. The candidate deriver 32 calculates the degree of suitability of each printer 16 using the job attribute information extracted by the job attribute extractor 22, and the printer attribute information acquired by the printer attribute acquirer 30, and may derive, as the candidate printers 16, printers with the calculated degree of suitability higher than the degrees of suitability of other printers 16. Alternatively, the candidate deriver 32 calculates the degree of suitability of each printer 16 using the job attribute information and the printer attribute information, and may derive, as the candidate printers 16, those printers 16 with the calculated degree of suitability higher than or equal to a predetermined threshold value. The number of the candidate printers 16 to be derived may be plural. For example, as an example of the degree of suitability, the degree of earliness of completion of printing a job is used. The candidate deriver 32 checks the print schedules of all printers 16 in a factory, and selects printers 16 in the order that is appropriate for the attribute information such as the color mode of the job in order to print the unassigned job, and that achieves early completion of printing.

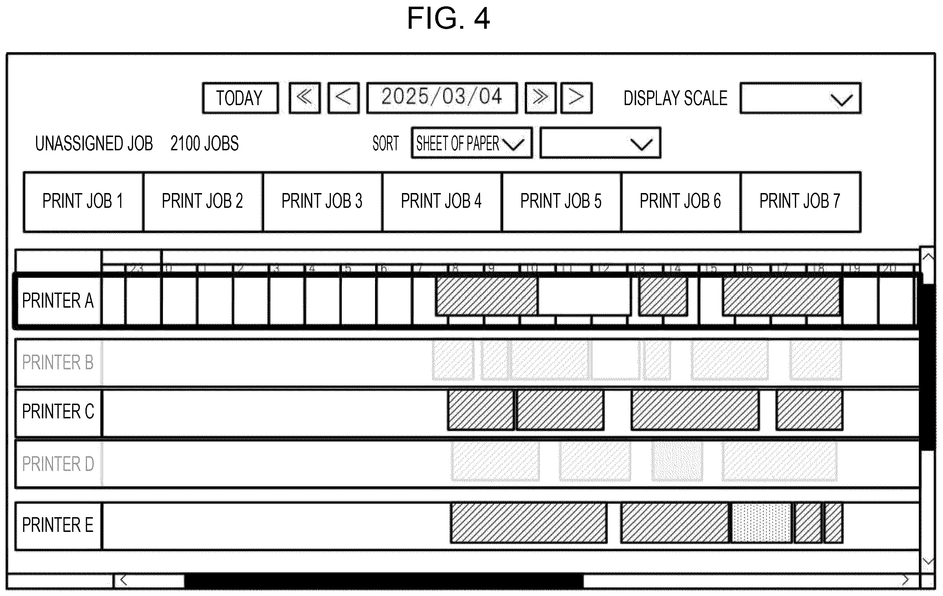

The display processor 34 displays the candidate printers 16 derived by the candidate deriver 32, and the other printers 16 in different manners on the display 12F. For example, the display processor 34 displays the candidate printers 16 derived by the candidate deriver 32 and the other printers 16 in different modes on the display 12F. Specifically, as illustrated in Fig. 4, the display processor 34 displays the candidate printers 16 by highlighting three (an example of a predetermined number) candidate printers 16 against the other printers 16, and displays the printer 16 achieving the earliest completion of printing with a frame line. Fig. 4 is a screen illustrating a display example of candidate printers 16. In the example of Fig. 4, a printer A, a printer C, and a printer E are highlighted, and as an example of displaying the best candidate in an identifiable mode, the printer A achieving the earliest completion of printing is displayed with a frame line. In the example of Fig. 4, scheduled jobs to be processed by the printers 16 are shown by hatching. The jobs shown by hatching are arranged along the time axis for each printer 16. Note that the number of printers 16 displayed as the candidates is not limited to three, and may be one or a number other than three. When an error in a printer 16 is detected from the printer attribute information, at the time of displaying candidate printers 16 for executing a job, the printer 16 with the error may be displayed in an identifiable mode. For example, the printer 16 with an error detected is displayed in red color or in red blanking.

In the first exemplary embodiment, by the above-described functions, the turnaround time required for a job is calculated at the timing of receiving the job using the job attribute information, and candidate printers 16 are derived using the turnaround time and the attribute information of each printer 16 at the timing of selection of the job to be executed. The derived candidate printers 16 and the other printers 16 are displayed in different manners.

Next, the specific process performed in thus configured print management device 12 according to the present exemplary embodiment will be described.

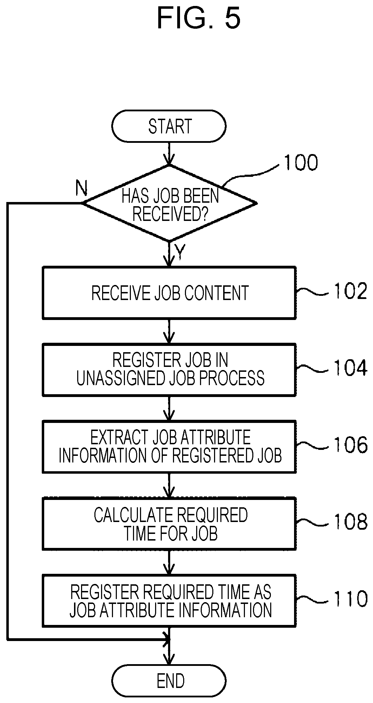

First, the process when a job is registered in the unassigned job process will be described. Fig. 5 is a flowchart illustrating an example of a flow of the process performed when a job is registered in the unassigned job process in the print management device 12 according to the present exemplary embodiment. Note that the process in Fig. 5 may be started, for example, when the operation unit 12E is operated, or when the print management device 12 is operated from an external computer or the like through the communication line 18.

In step 100, the CPU 12A determines whether a print job has been received. The determination is made whether the job reception unit 20 has received a job including a print file requested from a client and job attribute information. When the determination is affirmative, the flow proceeds to step 102, and when a result of selection of an unassigned job is received, the determination is negative, and a series of processes are completed, then another process corresponding to the received operation is performed.

In step 102, the CPU 12A receives the job, and the flow proceeds to step 104. Specifically, the job reception unit 20 receives, as a job, a print file requested from a client and job attribute information related to printing.

In step 104, the CPU 12A registers the received job in the unassigned job process, and the flow proceeds to step 106. Specifically, the job reception unit 20 stores the received job in the storage 12D as an unassigned job process.

In step 106, the CPU 12A acquires the job attribute information of the job registered in the unassigned job process, and the flow proceeds to step 108. Specifically, when the job is registered in the unassigned job process, the job attribute extractor 22 analyzes the job, and extracts all pieces of job attribute information that affects on the printing speed, such as the number of pages, color mode, and imposition method of the job.

In step 108, the CPU 12A calculates the turnaround time of the job, and the flow proceeds to step 110. Specifically, the turnaround time calculator 24 calculates the turnaround time required for printing the unassigned job based on the job attribute information acquired by the job attribute acquirer 28 and the past job history.

In step 110, the CPU 12A registers the calculated turnaround time in the storage 12D as the job attribute information and as an unassigned job process, then completes a series of processes.

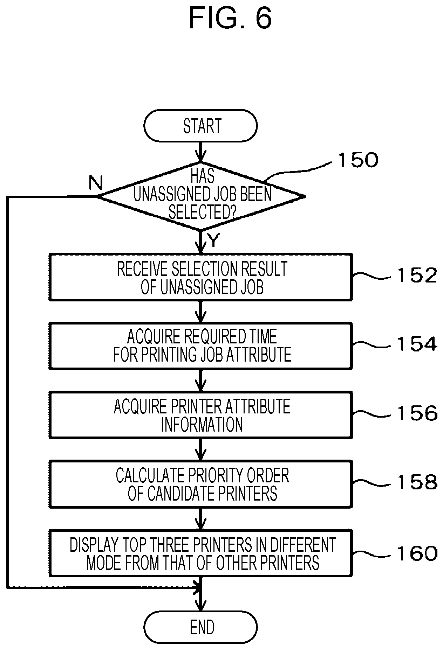

Next, the process when an unassigned job is selected and candidates for executing the job are displayed will be described. Fig. 6 is a flowchart illustrating an example of a flow of the process performed when an unassigned job is selected and candidates for executing the job are displayed in the print management device 12 according to the present exemplary embodiment. Note that the process in Fig. 6 may be started, for example, when the operation unit 12E is operated, or when the print management device 12 is operated from an external computer or the like through the communication line 18.

In step 150, the CPU 12A determines whether an unassigned job has been selected. The determination is made whether the unassigned job reception unit 26 has received selection of a job to be executed from the jobs registered in the unassigned job process. When the determination is affirmative, the flow proceeds to step 152, and when a job or the like is received, the determination is negative, and a series of processes are completed, then another process corresponding to the received operation is performed.

In step 152, the CPU 12A receives a result of selection of an unassigned job, and the flow proceeds to step 154. Specifically, the unassigned job reception unit 26 receives selection of a job to be executed from the jobs registered in the unassigned job process.

In step 154, the CPU 12A acquires the turnaround time for printing in the job attribute information, and the flow proceeds to step 156. Specifically, the job attribute acquirer 28 acquires the turnaround time by obtaining, from the storage 12D, job attribute information corresponding to the selected job, the job attribute information with the turnaround time added.

In step 156, the CPU 12A acquires the printer attribute information, and the flow proceeds to step 158. Specifically, the printer attribute acquirer 30 acquires the printer attribute information of each printer 16 from all DFE devices 14.

In step 158, the CPU 12A derives a priority order of candidate printers 16, and the flow proceeds to step 160. Specifically, the candidate deriver 32 derives candidate printers 16 for executing the unassigned job registered in the unassigned job process, and derives a priority order.

In step 160, the CPU 12A displays the top three printers 16 in the priority order and the other printers 16 in different modes, and completes a series of processes. Specifically, the display processor 34 displays the top three candidate printers 16 derived by the candidate deriver 32, and the other printers 16 in different modes on the display 12F. For example, as illustrated in Fig. 4, the printer A, the printer C, and the printer E are highlighted, and the printer A achieving the earliest completion of printing is displayed with a frame line. Thus, it is possible to recognize the printers 16 suitable for the job to be executed among the plurality of printers 16.

### (Second Exemplary Embodiment)

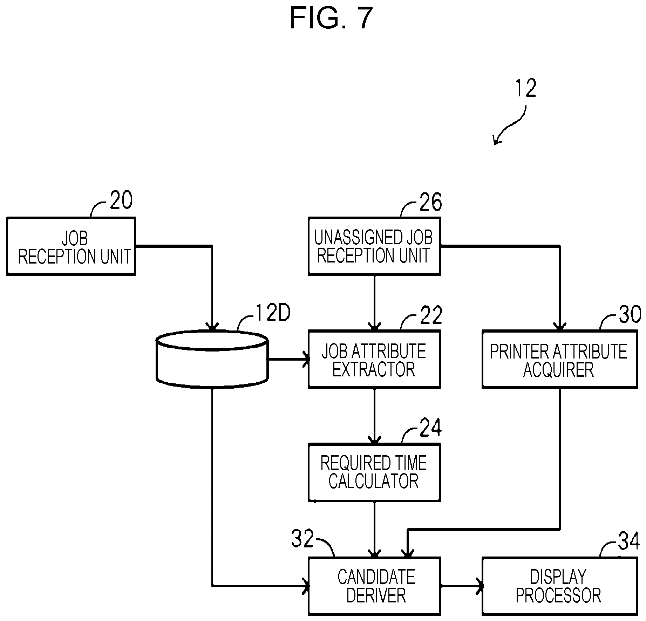

Subsequently, the functional configuration of a print management device 12 according to a second exemplary embodiment will be described. The functional configuration is implemented by the CPU 12A of the print management device 12 loading a program stored in the ROM 12B or the storage 12D into the RAM12C and executing the program. Fig. 7 is a functional block diagram illustrating an example of the functional configuration of the print management device 12 according to the second exemplary embodiment. Note that the function commonly implemented in the first exemplary embodiment is labeled with the same symbol, and will be described.

In the second exemplary embodiment, an example will be described in which the timing for calculating the turnaround time is different from that in the first exemplary embodiment. In the present exemplary embodiment, an example will be described in which the turnaround time required for a job is calculated at the timing of selection of a job after the job is received.

The print management device 12 according to the present exemplary embodiment has the functions of the job reception unit 20, the unassigned job reception unit 26, the job attribute extractor 22, the turnaround time calculator 24, the printer attribute acquirer 30, the candidate deriver 32, and the display processor 34.

The job reception unit 20 receives a job including a print file requested from a client and job attribute information related to printing, and stores the job in the storage 12D. When storing the job in the storage 12D, the job reception unit 20 registers the received job as an unassigned job process.

The unassigned job reception unit 26 receives selection of a job to be executed from the jobs registered in the unassigned job process.

The job attribute extractor 22 analyzes the selected job, and extracts all pieces of job attribute information that affects on the printing speed, such as the number of pages, color mode, and imposition method of the job.

The turnaround time calculator 24 calculates the turnaround time required for printing the unassigned job based on the job attribute information extracted by the job attribute extractor 22 and the past job history. The turnaround time calculator 24 calculates the turnaround time from the past job history using the average value or the like of histories corresponding to the job attribute information. Note that it is assumed that the storage 12D stores the past print history required for calculation of the turnaround time for printing.

The printer attribute acquirer 30 acquires the printer attribute information of each printer 16 from all DFE devices 14. The printer attribute information includes the function, performance and schedule of each printer.

The candidate deriver 32 derives candidate printers 16 for executing the unassigned job registered in the unassigned job process. The candidate deriver 32 calculates the degree of suitability of each printer 16 using the turnaround time calculated by the turnaround time calculator 24, and the printer attribute information acquired by the printer attribute acquirer 30, and may derive, as the candidate printers 16, printers with the calculated degree of suitability higher than the degrees of suitability of other printers 16. Alternatively, the candidate deriver 32 calculates the degree of suitability of each printer 16 using the job attribute information and the printer attribute information, and may derive, as the candidate printers 16, those printers 16 with the calculated degree of suitability higher than or equal to a predetermined threshold value. The number of the candidate printers 16 to be derived may be plural. For example, as an example of the degree of suitability, the degree of earliness of completion of printing a job is used. The candidate deriver 32 checks the print schedules of all printers 16 in a factory, and selects printers 16 in the order that is appropriate for the attribute information such as the color mode of the job in order to print the unassigned job, and that achieves early completion of printing.

The display processor 34 displays the candidate printers 16 derived by the candidate deriver 32, and the other printers 16 in different manners on the display 12F. For example, the display processor 34 displays the candidate printers 16 derived by the candidate deriver 32 and the other printers 16 in different modes on the display 12F. Specifically, as in the first exemplary embodiment, as illustrated in Fig. 4, the display processor 34 displays the candidate printers 16 by highlighting three candidate printers 16 against the other printers 16, and displays the printer 16 achieving the earliest completion of printing with a frame line. Note that the number of printers 16 displayed as candidates is not limited to three, and may be one or a number other than three.

In the second exemplary embodiment, by the above-described functions, the turnaround time required for the job is calculated using the job attribute information at the timing of selection of a job to be executed after the job is received, and candidate printers 16 are derived using the calculated turnaround time and the attribute information of each printer 16. The derived candidate printers 16 and the other printers 16 are displayed in different manners.

Next, the specific process performed in thus configured print management device 12 according to the present exemplary embodiment will be described.

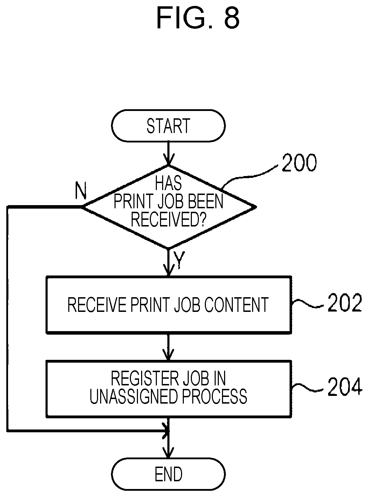

First, the process when a job is registered in the unassigned job process will be described. Fig. 8 is a flowchart illustrating an example of a flow of the process performed when a job is registered in the unassigned job process in the print management device 12 according to the present exemplary embodiment. Note that the process in Fig. 8 may be started, for example, when the operation unit 12E is operated, or when the print management device 12 is operated from an external computer or the like through the communication line 18.

In step 200, the CPU 12A determines whether a print job has been received. The determination is made whether the job reception unit 20 has received a job including a print file requested from a client and job attribute information. When the determination is affirmative, the flow proceeds to step 202, and when a result of selection of an unassigned job is received, the determination is negative, and a series of processes are completed, then another process corresponding to the received operation is performed.

In step 202, the CPU 12A receives the job, and the flow proceeds to step 204. Specifically, the job reception unit 20 receives the job including a print file requested from a client and job attribute information related to printing.

In step 204, the CPU 12A registers the received job in the unassigned job process, and completes a series of processes. Specifically, the job reception unit 20 stores the received job in the storage 12D as an unassigned job process.

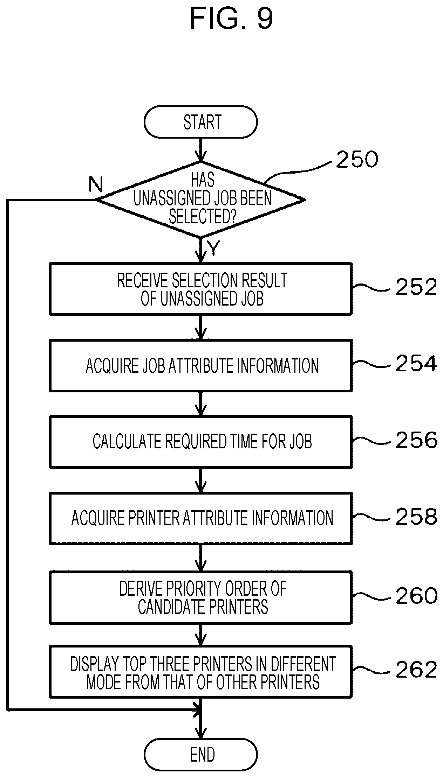

Next, the process when an unassigned job is selected and candidates for executing the job are displayed will be described. Fig. 9 is a flowchart illustrating an example of a flow of the process performed when an unassigned job is selected and candidates for executing the job are displayed in the print management device 12 according to the present exemplary embodiment. Note that the process in Fig. 9 may be started, for example, when the operation unit 12E is operated, or when the print management device 12 is operated from an external computer or the like through the communication line 18.

In step 250, the CPU 12A determines whether an unassigned job has been selected. The determination is made whether the unassigned job reception unit 26 has received selection of a job to be executed from the jobs registered in the unassigned job process. When the determination is affirmative, the flow proceeds to step 152, and when a job or the like is received, the determination is negative, and a series of processes are completed, then another process corresponding to the received operation is performed.

In step 252, the CPU 12A receives a result of selection of an unassigned job, and the flow proceeds to step 254. Specifically, the unassigned job reception unit 26 receives selection of a job to be executed from the jobs registered in the unassigned job process.

In step 254, the CPU 12A acquires the job attribute information of the selected job, and the flow proceeds to step 256. Specifically, the job attribute extractor 22 analyzes the selected job, and extracts all pieces of job attribute information that affects on the printing speed, such as the number of pages, color mode, and imposition method of the job.

In step 256, the CPU 12A calculates the turnaround time of the job, and the flow proceeds to step 258. Specifically, the turnaround time calculator 24 calculates the turnaround time required for printing the unassigned job based on the job attribute information extracted by the job attribute extractor 22 and the past job history. For example, the turnaround time calculator 24 calculates the turnaround time from the past job history stored in the storage 12D using the average value or the like of histories corresponding to the job attribute information.

In step 258, the CPU 12A acquires the printer attribute information, and the flow proceeds to step 260. Specifically, the printer attribute acquirer 30 acquires the printer attribute information of each printer 16 from all DFE devices 14.

In step 260, the CPU 12A derives a priority order of candidate printers 16, and the flow proceeds to step 262. Specifically, the candidate deriver 32 derives candidate printers 16 for executing the unassigned job registered in the unassigned job process, and derives a priority order.

In step 262, the CPU 12A displays the top three printers 16 in the priority order and the other printers 16 in different modes, and completes a series of processes. Specifically, the display processor 34 displays the top three candidate printers 16 derived by the candidate deriver 32, and the other printers 16 in different modes on the display 12F. For example, as illustrated in Fig. 4, the printer A, the printer C, and the printer E are highlighted, and the printer A achieving the earliest completion of printing is displayed with a frame line. Thus, it is possible to recognize the printers 16 suitable for the job to be executed among the plurality of printers 16.

### (Third Exemplary Embodiment)

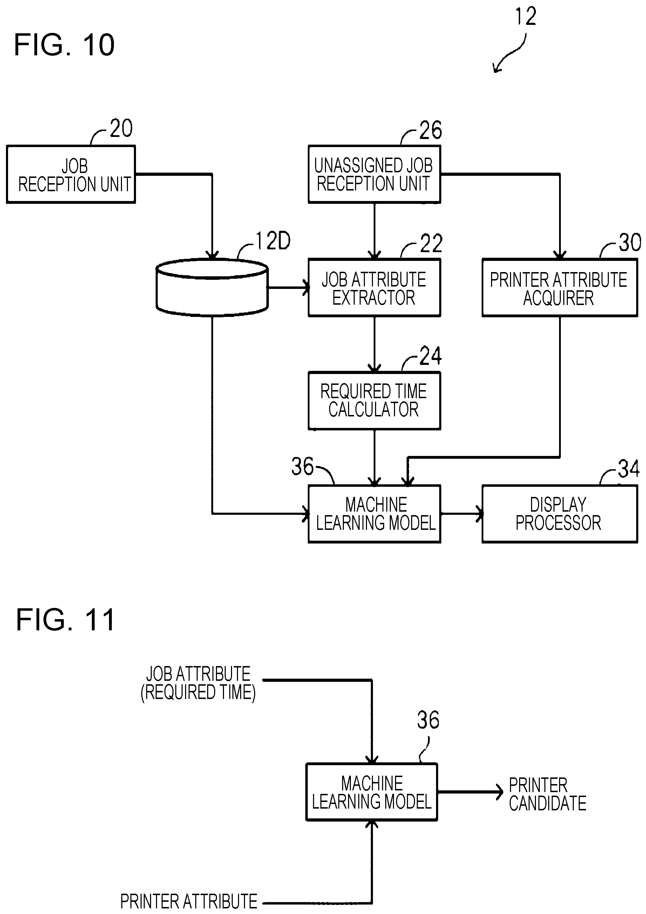

Subsequently, the functional configuration of a print management device 12 according to a third exemplary embodiment will be described. The functional configuration is implemented by the CPU 12A of the print management device 12 loading a program stored in the ROM 12B or the storage 12D into the RAM12C and executing the program. Fig. 10 is a functional block diagram illustrating an example of the functional configuration of the print management device 12 according to the third exemplary embodiment. Note that the function commonly implemented in the second exemplary embodiment is labeled with the same symbol, and will be described.

The present exemplary embodiment differs from the second exemplary embodiment in that candidate printers 16 are calculated using a machine learning model represented by artificial intelligence (AI), thus only the difference will be described.

The present exemplary embodiment is provided with the function of a machine learning model 36 instead of the candidate deriver 32 in the second exemplary embodiment. Fig. 11 is a diagram illustrating an example of input and output to and from the machine learning model 36.

The machine learning model 36 learns, as training data, a history of jobs of printing executed in the past. For example, a learning model is generated by learning the tendency of allocation of a plurality of job parameters included in job attributes to the printers 16 from the past history.

Specifically, as illustrated in Fig. 11, job attribute information including the turnaround times, and the printer attribute information acquired from all printers 16 are input to the machine learning model 36, thus candidate printers 16 are obtained as the output of the machine learning model 36. As in the first exemplary embodiment and the second exemplary embodiment, as the candidate printers 16, top three candidates in the priority order may be obtained as the output, or the most suitable candidate printers 16 may be obtained as the output.

Specifically, when a job is requested by a specific client, the machine learning model 36 may use what is learned by deriving predetermined specific printers 16 as candidates, deriving predetermined printers 16 as candidates according to the job type, or deriving predetermined printers 16 as candidates according to the cost. Thus, candidate printers 16 suitable for each of the specific client, the job type, and the cost are derived.

Note that the candidate deriver 32 of the first exemplary embodiment and the second exemplary embodiment, and the machine learning model 36 of the third exemplary embodiment may check the print schedules of all printers 16 to meet the deadline, and may derive candidate printers 16 in the order that achieves the earliest completion of printing of the unassigned jobs. In consideration of absence of a worker in the middle of night, candidate printers 16 may be derived in the order that achieves early completion of printing in order to print an unassigned job without adding any to the consumables, such as toner and paper, set in the current printers 16. Also, in consideration of a difficult personalized work, candidate printers 16 may be derived in the order that achieves early completion of printing while checking a shift of predetermined specific workers.

In the above exemplary embodiments, as the degree of suitability, the degree of earliness of completion of printing a job has been described as an example of a specific example; however, the present disclosure is not limited to this.

In the above exemplary embodiments, a printer 16 is used as an example of a machine, but the machine is not limited to the printer 16, and other machines such as an image processing device, and a processing machine may be used.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. The program of the present application may be provided as a program product.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

As an example, the "system" in the exemplary embodiments may be constructed by a plurality of devices, or may be constructed by a single device having the function of part of a plurality of devices.

The process performed by the print management device 12 according to the exemplary embodiments above may be a process performed by software, a process performed by hardware, or a process performed by both in combination. The process performed by the print management device 12 may be stored as a program in a storage medium and distributed.

The present disclosure is not limited to the above embodiments, and within a range not departing from the spirit of the present disclosure, various modifications may be made.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising
   a processor configured to:
   arrange and display jobs scheduled to be processed by a plurality of machines along a time axis for each of the machines;
   upon receiving a new job to be newly arranged, acquire process attribute information related to a process executed by the new job;
   acquire, from the plurality of machines, attribute information related to processing capacity of each of the machines; and
   display candidate machines for executing the process and other machines in different manners using the process attribute information and the attribute information of each of the machines.
(((2))) The information processing system according to (((1))),
   wherein the processor is configured to calculate a degree of suitability of each of the machines using the process attribute information and the attribute information of each of the machines, and derive, as the candidate machines, machines with the calculated degree of suitability higher than degrees of suitability of other machines.
(((3))) The information processing system according to (((1))),
   wherein the processor is configured to calculate a degree of suitability of each of the machines using the process attribute information and the attribute information of each of the machines, and derive, as the candidate machines, machines with the calculated degree of suitability higher than or equal to a predetermined threshold value.
(((4))) The information processing system according to any one of (((1))) to (((3))),
   wherein the processor is configured to calculate a turnaround time required for the job using the process attribute information at a timing of receiving the job, and derive candidate machines using the turnaround time and the attribute information of each of the machines at a timing of selection of the job.
(((5))) The information processing system according to any one of (((1))) to (((3))),
   wherein the processor is configured to calculate a turnaround time required for the job using the process attribute information at a timing of selection of the job after the job is received, and derive the candidate machines using the calculated turnaround time and the attribute information of each of the machines.
(((6))) The information processing system according to any one of (((1))) to (((5))),
   wherein the processor is configured to display the candidate machines and the other machines in different modes.
(((7))) The information processing system according to (((6))),
   wherein the processor is configured to display a best candidate among the candidate machines in an identifiable mode.
(((8))) The information processing system according to any one of (((1))) to (((7))),
   wherein the processor is configured to display a predetermined number of machines achieving early execution of the job as the candidate machines, and the other machines in different manners.
(((9))) The information processing system according to (((8))),
   wherein the processor is configured to display, as the candidate machines, a machine achieving earliest completion of the job in an identifiable mode.
(((10))) The information processing system according to any one of (((1))) to (((9))),
   wherein the processor is configured to derive the candidate machines using a learning model learned in advance.
(((11))) The information processing system according to (((10))),
   wherein the learning model is a learning model learned using a past print history.
(((12))) The information processing system according to any one of (((1))) to (((11))),
   wherein the processor is configured to derive the candidate machines capable of performing the process without replenishing consumables.
(((13))) The information processing system according to any one of (((1))) to (((11))),
   wherein the processor is configured to acquire the process attribute information including worker in charge information, and derive the candidate machines further using the worker in charge information.
(((14))) A program causing a computer to execute a process for information, the process comprising:
   arranging and displaying jobs scheduled to be processed by a plurality of machines along a time axis for each of the machines;
   upon receiving a new job to be newly arranged, acquiring process attribute information related to a process executed by the new job;
   acquiring, from the plurality of machines, attribute information related to processing capacity of each of the machines; and
   displaying candidate machines for executing the process and other machines in different manners using the process attribute information and the attribute information of each of the machines.

According to (((1))), it is possible to provide an information processing system that enables recognition of the machines suitable for the job to be executed among a plurality of machines.

According to (((2))), it is possible to recognize machines with a degree of suitability for a job higher than that of other machines.

According to (((3))), it is possible to recognize machines with a degree of suitability higher than or equal to a predetermined threshold value.

According to (((4))), the processing time for displaying the candidate machines can be reduced, as compared to when the turnaround time of each candidate machine is calculated at the time of display of the candidate machine.

According to (((5))), the processing load for receiving a job can be reduced, as compared to when the turnaround time is calculated at the timing of receiving the job.

According to (((6))), the candidate machines and the other machines can be easily distinguished, as compared to when the candidate machines and the other machines are not displayed in different modes.

According to (((7))), the best machine among the candidate machines can be recognized.

According to (((8))), it is possible to recognize machines that achieve early completion of the job among the plurality of machines.

According to (((9))), it is possible to recognize the machine that achieves the earliest completion of the job among the plurality of machines.

According to (((10))), the candidate machines that execute the process can be derived.

According to (((11))), candidates according to a past print history can be derived.

According to (((12))), candidate machines can be derived in consideration of absence of a worker in the middle of night.

According to (((13))), candidate machines can be derived in consideration of possibility of a difficult personalized work.

According to (((14))), it is possible to provide an information processing program that enables recognition of machines suitable for the job to be executed among a plurality of machines.

## Claims

1. An information processing system comprising:
a processor configured to:
arrange and display jobs scheduled to be processed by a plurality of machines along a time axis for each of the machines;
upon receiving a new job to be newly arranged, acquire process attribute information related to a process executed by the new job;
acquire, from the plurality of machines, attribute information related to processing capacity of each of the machines; and
display candidate machines for executing the process and other machines in different manners using the process attribute information and the attribute information of each of the machines.

2. The information processing system according to claim 1,
wherein the processor is configured to calculate a degree of suitability of each of the machines using the process attribute information and the attribute information of each of the machines, and derive, as the candidate machines, machines with the calculated degree of suitability higher than degrees of suitability of other machines.

3. The information processing system according to claim 1,
wherein the processor is configured to calculate a degree of suitability of each of the machines using the process attribute information and the attribute information of each of the machines, and derive, as the candidate machines, machines with the calculated degree of suitability higher than or equal to a predetermined threshold value.

4. The information processing system according to any one of claims 1 to 3,
wherein the processor is configured to calculate a turnaround time required for the job using the process attribute information at a timing of receiving the job, and derive candidate machines using the turnaround time and the attribute information of each of the machines at a timing of selection of the job.

5. The information processing system according to any one of claims 1 to 3,
wherein the processor is configured to calculate a turnaround time required for the job using the process attribute information at a timing of selection of the job after the job is received, and derive the candidate machines using the calculated turnaround time and the attribute information of each of the machines.

6. The information processing system according to any one of claims 1 to 5,
wherein the processor is configured to display the candidate machines and the other machines in different modes.

7. The information processing system according to claim 6,
wherein the processor is configured to display a best candidate among the candidate machines in an identifiable mode.

8. The information processing system according to any one of claims 1 to 7,
wherein the processor is configured to display a predetermined number of machines achieving early execution of the job as the candidate machines, and the other machines in different manners.

9. The information processing system according to claim 8,
wherein the processor is configured to display, as the candidate machines, a machine achieving earliest completion of the job in an identifiable mode.

10. The information processing system according to any one of claims 1 to 9,
wherein the processor is configured to derive the candidate machines using a learning model learned in advance.

11. The information processing system according to claim 10,
wherein the learning model is a learning model learned using a past print history.

12. The information processing system according to any one of claims 1 to 11,
wherein the processor is configured to derive the candidate machines capable of performing the process without replenishing consumables.

13. The information processing system according to any one of claims 1 to 11,
wherein the processor is configured to acquire the process attribute information including worker in charge information, and derive the candidate machines further using the worker in charge information.

14. An information processing program causing a computer to execute a process comprising:
arranging and displaying jobs scheduled to be processed by a plurality of machines along a time axis for each of the machines;
upon receiving a new job to be newly arranged, acquiring process attribute information related to a process executed by the new job;
acquiring, from the plurality of machines, attribute information related to processing capacity of each of the machines; and
displaying candidate machines for executing the process and other machines in different manners using the process attribute information and the attribute information of each of the machines.

15. An information processing method comprising:
arranging and displaying jobs scheduled to be processed by a plurality of machines along a time axis for each of the machines;
upon receiving a new job to be newly arranged, acquiring process attribute information related to a process executed by the new job;
acquiring, from the plurality of machines, attribute information related to processing capacity of each of the machines; and
displaying candidate machines for executing the process and other machines in different manners using the process attribute information and the attribute information of each of the machines.
